# EUROPÄISCHE PATENTSCHRIFT

(11) **EP 3 132 003 B1**
(45) Veröffentlichungstag und Bekanntmachung des Hinweises auf die Patenterteilung: **05.06.2019**
(21) Anmeldenummer: 15715283.6
(22) Anmeldetag: 13.04.2015
(51) Int. Cl.: C09K 21/04

(54) **BRANDSCHUTZDICHTMASSE UND DEREN VERWENDUNG**
FIRE PROTECTION SEALING MASS AND USE OF THE SAME
COMPOSANT POUR JOINT IGNIFUGE ET SON UTILISATION

(30) Priorität: 16.04.2014 EP 14164839
(43) Veröffentlichungstag der Anmeldung: 22.02.2017
(73) Patentinhaber: Hilti Aktiengesellschaft, 9494 Schaan (LI)
(72) Erfinder: SIMON, Sebastian, 86807 Buchloe Lindenberg (DE); WÖLFLE, Ingrid, 86150 Augsburg (DE); MÜNZENBERGER, Herbert, 65191 Wiesbaden (DE)
(86) Internationale Anmeldenummer: PCT/EP2015/057945
(87) Internationale Veröffentlichungsnummer: WO 2015/158651

(56) Entgegenhaltungen:
- US-A- 5 356 568
- US-A1- 2004 054 035

## Beschreibung

Die Erfindung betrifft eine Zusammensetzung für Brandschutzanwendungen, insbesondere eine Dichtmasse auf Basis einer wässrigen oder Lösungsmittel-basierten Polymerdispersion sowie ihre Verwendung zur Abdichtung von Öffnungen, Kabel- und Rohrdurchführungen in Wänden, Böden und/oder Decken von Gebäuden, etc.

Für die Feuer- und Rauchabdichtung oder -abschottung von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke der Wärmeisolation und/oder des Brandschutzes werden eine Reihe unterschiedlicher Dichtungsprodukte eingesetzt, die unter anderem als Dichtmassen vorliegen können oder zusätzlich zu anderen Dichtungsprodukten Verwendung finden.

Die Dichtmassen besitzen einen eigenständigen Anwendungsbereich bei Durchführungen von kunststoffisolierten Einzelkabeln, Kabelbündeln und Rohren durch Öffnungen in Wänden, Böden und/oder Decken von Gebäuden. Sehr häufig werden sie in Kombination mit anderen vorgefertigten Systemen, wie Blöcken oder Platten eingesetzt. Dieser Anwendungsbereich betrifft insbesondere das Verschließen von Öffnungen wenn Kommunikationskabeln oder Rohrleitungen bereits verlegt sind.

Für die Zwecke des Brandschutzes werden den Dichtmassen Additive zugesetzt, welche bei erhöhter Temperatur, wie etwa im Brandfall, zu einem Expandieren (auch Intumeszieren) der Dichtmasse führen, somit eine isolierende Schicht bilden und ggf. die durch den Abbrand von Kunststoffrohrleitungen entstandene Öffnung verschließen.

Die DE 196 31 813 A1 beschreibt eine derartige Dichtmasse, die bei einer erhöhten Umgebungstemperatur, wie etwa in Folge eines Brandes, intumesziert. Die Dichtmasse enthält ein Bindemittel auf Basis einer Kombination aus einer Acrylat-Dispersion und einem Alkydharz, Brandschutzadditive, also solche, welche die Intumeszenz bewirken, Additive zur Stabilisierung der im Brandfall entstehenden Aschekruste, sogenannte Aschekrustenstabilisatoren sowie weitere Additive und Füllstoffe.

Die US 2004/054035 A1 beschreibt eine Zusammensetzung auf Basis einer wässrigen Polymerdispersion für Brandschutzanwendungen.

Die US 5 356 568 A offenbart Zusammensetzungen für Brandschutzanwendungen enthaltend ein organisches Bindemittel, ein anorganisches Bindemittel, ein Treibmittel, ein kohlenstoffhaltiges Material, ein phosphorhaltiges Material, ein halogenhaltiges Material, einen anorganischen Füllstoff und ein organisches Lösungsmittel.

Die Zusammensetzung gemäß Beispiel 1 der DE 196 31 813 A1 enthält neben dem Brandschutzadditiv Ammoniumpolyphosphat sowie Zinkborat und Glasfasern als Aschekrustenstabilisatoren und unter anderem Kalziumcarbonat als Füllstoff, wobei der Anteil an Zinkborat mit etwa 12 Gew.-% und an Ammoniumpolyphosphat mit etwa 10 % relativ hoch ist. Die beschriebene Zusammensetzung weist damit viele Bestandteile auf, welche die Zusammensetzung sehr komplex und auch teuer machen, insbesondere durch den hohen Anteil an Zinkborat und Ammoniumpolyphosphat.

Zur Reduktion der Herstellkosten ist es erforderlich, eine vereinfachte Zusammensetzung bereitzustellen, deren Brandschutzeigenschaften trotz der vereinfachten Zusammensetzung nicht nachteilig beeinflusst werden. Um nun den wachsenden Brandschutzanforderungen verschiedener Länder gerecht zu werden, muss eine feste Aschekruste sichergestellt sein, die auch den in den USA üblichen Hose-Stream-Test, bei dem die Aschekruste nach dem Abbrand der Zusammensetzung einem Wasserstrahl der mit einem bestimmten Druck auf den Testaufbau gerichtet wird, standhalten muss. Hierzu ist eine feste Aschekruste erforderlich, die mit einem hohen Anteil an sogenannten Aschekrustenstabilisatoren erreicht werden kann. Unter Berücksichtigung der Vorgabe, dass die Formulierung möglichst einfach und kostengünstig sein soll, kann dies, verglichen mit der Zusammensetzung aus der DE 196 31 813 A1, mit einer Vereinfachung der Zusammensetzung der Aschekrustenstabilisatoren und/oder Reduktion des Anteils der teuren Aschekrustenstabilisatoren sowie einer Erhöhung des Faseranteils erreicht werden. Allerdings ergibt sich hierdurch das Problem, dass mit Erhöhung des Faseranteils die Masse zäh und rau wird und dementsprechend schwer zu verarbeiten ist.

Es besteht daher Bedarf an einer möglichst einfachen Zusammensetzung, die gute Brandschutzeigenschaften aufweist, insbesondere die im Brandfall eine feste Aschekruste ergibt, und die dennoch gut zu verarbeiten, insbesondere zu glätten ist.

Die Erfinder haben herausgefunden, dass durch die Verwendung eines kugelförmigen Füllstoffes mit bestimmter Partikelgröße sowohl eine einfache Zusammensetzung erhalten als auch im Brandfall eine harte Aschekruste gebildet wird.

Überraschender Weise lässt sich der negative Einfluss der anorganischen Fasern auf die Verarbeitbarkeit durch die Verwendung eines kugelförmigen Füllstoffes bestimmter Partikelgröße kompensieren, ohne dass zusätzliche Additive zur Beeinflussung der Verarbeitbarkeit, wie etwa flüssige Komponenten, verwendet werden müssen. Aber auch bei Zusammensetzungen mit einem niedrigen Faseranteil wirkt sich die Gegenwart des kugelförmigen Füllstoffes positiv auf die Verarbeitbarkeit aus und führt zu einer sehr harten Aschekruste, der über das erwartete Maß hinausgeht. Die Kombination aus anorganischen Fasern und kugelförmigem Füllstoff mit bestimmter Partikelgröße führt somit zu einem synergistischen Effekt.

Es hat sich herausgestellt, dass es ausreichend ist, wenn die Brandschutzadditive ein physikalisch wirkendes Treibmittel und einen Aschekrustenstabilisator enthalten, um im Brandfall eine sehr harte Aschekruste zu bilden.

Ein Gegenstand der Erfindung ist nun eine Zusammensetzung, welche ein Bindemittel auf Basis einer wässrigen oder Lösungsmittel-basierten Polymerdispersion, Brandschutzadditive, welche ein physikalisch wirkendes Treibmittel und einen Aschekrustenstabilisator umfassen, anorganische Fasern, einen kugelförmigen Füllstoff und gegebenenfalls weitere Additive und/oder Füllstoffe umfasst, wobei die Länge der anorganischen Fasern zwischen 2 und 12 mm beträgt.

Das Bindemittel ist erfindungsgemäß eine Polymerdispersion auf Wasser- oder Lösungsmittelbasis, insbesondere eine wässrige Polymerdispersion. Beispiele wässriger Polymerdispersionen, die sich in besonderem Masse bewährt haben, sind wässrige Acrylatdispersionen, wässrige Dispersionen bzw. Emulsionen von Harnstoff-, Formaldehyd- oder Melaminharzen, Polyvinylacetaten, Polyvinylalkoholen, Acrylnitril, Styrolacrylaten und ihrer Copolymere.

Bevorzugt enthält die erfindungsgemäße Zusammensetzung als Bindemittel eine wässrige Acrylat-(Copolymer)-Dispersion, besonders bevorzugt eine wässrige Dispersion eines Polyalkyl-(meth)acrylats und/oder eines Alkyl(meth)acrylat-Copolymers. Vorzugsweise handelt es sich dabei um wässrige Dispersionen, die man durch Polymerisation, namentlich durch Emulsionspolymerisation von Alkyl(meth)acrylaten und/oder durch Copolymerisation von Alkyl(meth)acrylaten mit sich und/oder mit copolymerisierbaren Comonomeren, wie vorzugsweise (Meth)acrylsäure, (Meth)acrylamid, Styrol, Itaconsäure, Acrylnitril und/ oder Citraconsäure erhält, wobei die Alkylgruppen der Alkyl(meth)acrylate bevorzugt 1 bis 6 C-Atome, bevorzugter 1 bis 4 C-Atome aufweisen. Erfindungsgemäß besonders bevorzugt sind wässrige Dispersionen von Polybutylacrylat, Polyethylhexylacrylat oder Alkyl(meth)acrylat-Styrol-Copolymeren. Die Acrylat-(Copolymer)-Dispersion kann sowohl Homopolymere als auch Copolymere oder auch Mischungen von Homopolymeren und/oder Copolymeren enthalten und wird so vorzugsweise mit einem pH-Wert im Bereich von 7 bis 9, vorzugsweise einen pH-Wert von 8, welcher erforderlichenfalls mit verdünnter Natronlauge oder Ammoniaklösung eingestellt wird, mit den anderen Bestandteilen vermischt. Diese wässrige Acrylat- (Copolymer)-Dispersion besitzt vorzugsweise einen Feststoffgehalt von 30 bis 70 Gew.-%, stärker bevorzugt von 45 bis 65 Gew.-%. Die erfindungsgemäß eingesetzten Acrylat-(Copolymer)-Dispersionen sind dem Fachmann bekannt und im Handel erhältlich. Die Erhärtung erfolgt physikalisch durch Trocknen.

Erfindungsgemäß wird die isolierende Schicht, die Aschekruste, durch ein physikalisch wirkendes Treibmittel gebildet, welche physikalische Intumeszenz bewirkt. Dementsprechend umfasst das Brandschutzadditiv mindestens eine thermisch expandierbare Verbindung, wie eine Graphit-Interkallationsverbindung, die auch als Blähgraphit bekannt ist, eine Schichtsilikat-Interkallationsverbindung, insbesondere solche mit erhöhtem Expansionsvolumen, die auch als expandierbare Schichtsilikate bekannt sind, oder Vermiculit.

Als Graphit-Interkallationsverbindung (Blähgraphit) kommen beispielsweise bekannte Einlagerungsverbindungen von SOₓ, NOₓ, Halogen, Essigsäure und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Als Schichtsilikat-Interkallationsverbindungen (expandierbare Schichtsilikate) kommen beispielsweise solche Verbindungen in Betracht, die durch Einlagerung von Interkallationsverbindungen in native, blähfähige Schichtsilikate, insbesondere nativen Vermiculit, erhältlich sind. Als Interkallationsverbindung sind Vertreter der Alkoholate von Lithium und Kalium und Salze von Lithium, Natrium und Kalium mit organischen Säuren bevorzugt, die durch Kationenaustausch in das native Schichtsilikat einlagert werden. In dieser Hinsicht wird Bezug genommen auf die DE 10259084 A1 und die DE 10259085 A1 sowie die darin genannte Literatur, z.B. EP 0 429 246 A1 deren Inhalte hiermit in diese Anmeldung aufgenommen werden.

Darüber hinaus kann auch Vermiculit, ein Schichtsilikat, welches von Natur aus blähfähig ist, als physikalisch wirkendes Treibmittel eingesetzt werden. Durch Kationenaustausch kann die Aktvierungstemperatur verändert werden.

Das physikalisch wirkende Treibmittel ist bevorzugt in einer Menge von etwa 4 bis 15 Gew.-%, bevorzugt 5 bis 10 Gew.-%, besonders bevorzugt 5 bis 8 Gew.-%, bezogen auf das Gesamtgewicht der Zusammensetzung, enthalten.

Da die im Brandfall durch das physikalisch wirkende Treibmittel und durch den Abbrand des Bindemittels gebildete Aschekruste in der Regel zu instabil ist und abhängig von deren Dichte und Struktur bereits durch Luftströmungen verblasen werden kann, was sich negativ auf die isolierende Wirkung der Beschichtung auswirkt, wird zu den eben aufgeführten Komponenten mindestens ein Aschekrustenstabilisator gegeben.

Ein *"Aschekrustenstabilisator"* (häufig auch als Gerüstbildner bezeichnet) ist eine sogenannte gerüstbildende Verbindung, die das Kohlenstoffgerüst (Aschekruste), das aus dem physikalisch wirkenden Treibmittel und dem Bindemittel gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der aufgeblähten Aschekruste (Intumeszenzkruste) im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.

Als Aschekrustenstabilisatoren bzw. Gerüstbildner kommen die üblicherweise in Brandschutzformulierungen verwendeten und dem Fachmann bekannten Verbindungen in Betracht, beispielsweise teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, und/oder ein Borat, wie Zinkborat. Beispiele derartiger Additive finden sich auch in US 4 442 157 A, US 3 562 197 A, GB 755 551 A sowie EP 138 546 A1.

Bevorzugt ist der Aschekrustenstabilisator eine Phosphor-haltige Verbindung, die unter Salzen und Derivaten der Oxosäuren des Phosphors ausgewählt ist. Die Oxosäuren des Phosphors werden eingesetzt, da deren Palette sehr groß ist. Bei den Oxosäuren des Phosphors handelt es sich um Phosphorsäure (H₃PO₄) (auch als Orthophosphorsäure bezeichnet), Diphospohrsäure (H₄P₂O₇) (auch als Pyrophosphorsäure bezeichnet), Triphosphorsäure (H₅P₃O₁₀), Polyphosphorsäure (Hₙ₊₂PₙO₃ₙ₊₁), Polymetaphosphorsäure ((HPO₃)ₙ), Hypophosphorsäure (H₄P₂O₆) (auch Diphosphor(IV)-säure), Diphosphor(III,V)-säure (H₄P₂O₆), Phosphonsäure (H₃PO₂(2), wobei die Zahl in der Klammer die maximale Basigkeit der Säure bezeichnet, wenn diese sich von der Gesamtzahlt der H-Atome in der Formel unterscheidet) (auch als phosphorige Säure bezeichnet), Diphosphonsäure (H₄P₂O₅(2), wobei die Zahl in der Klammer die maximale Basigkeit der Säure bezeichnet, wenn diese sich von der Gesamtzahlt der H-Atome in der Formel unterscheidet) (auch als diphosphorige Säure bezeichent), Phosphinsäure (H₃PO₂(1), wobei die Zahl in der Klammer die maximale Basigkeit der Säure bezeichnet, wenn diese sich von der Gesamtzahlt der H-Atome in der Formel unterscheidet.

Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminpolyphopsphate, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen.

Der Aschekrustenstabilisator ist bevorzugt in einer Menge von etwa 5 bis 15 Gew.-%, bevorzugt 6 bis 12 Gew.-%, besonders bevorzugt 8 bis 10 Gew.-%, bezogen auf das Gesamtgewicht der Zusammensetzung, enthalten.

Erfindungsgemäß enthält die Zusammensetzung anorganische Fasern, insbesondere Faserkurzschnitte. Diese anorganischen Fasern stabilisieren im Brandfall die gebildete Aschekruste. Geeignete Fasern sind Glasfasern, insbesondere aus E-Glas, Silikatfasern oder Mineralwollfasern. Die Fasern haben erfindungsgemäß eine Länge von 2 bis 12 mm, bevorzugt 4 bis 8 mm und besonders bevorzugt 6 mm. Beispielhaft kann als Glasfaser der Faserkurzschnitt FG 413/6 der Firma STW (SCHWARZWÄLDER TEXTIL-WERKE, Heinrich Kautzmann GmbH) mit einem Faserdurchmesser von ca. 10 µm erwähnt werden.

Die anorganischen Fasern sind bevorzugt in einer Menge von etwa 0,5 bis 4 Gew.-%, bevorzugt 1 bis 3 Gew.-%, besonders bevorzugt 1 bis 2,5 Gew.-%, bezogen auf das Gesamtgewicht der Zusammensetzung, enthalten.

Erfindungsgemäß enthält die Zusammensetzung als Füllstoff einen kugelförmigen Füllstoff mit einer mittleren Korngröße zwischen 20 und 500 µm, besonders bevorzugt zwischen 40 und 150 µm. Besonders bevorzugt ist der kugelförmige Füllstoff ein Leichtfüllstoff, wie Hohlglaskugeln, Schaumglaskugeln, Flugasche, keramische-Hohlkugeln, Glaskugeln, insbesondere Vollglaskugeln (z.B. Ballotini® der Sto AG) und/oder Sande.

In Abgrenzung zu den Füllstoffen besitzen Leichtfüllstoffe ein wesentlich niedrigeres spezifisches Gewicht. Die erfindungsgemäß verwendbaren Leichtfüllstoffe haben ein spezifisches Gewicht von kleiner als 1 kg/l, insbesondere kleiner als 0,8 kg/l, ganz besonders kleiner als 0,6 kg/l.

Erfindungsgemäß weisen die festen, pulverförmigen Bestandteile - ausgenommen das physikalisch wirkende Treibmittel - eine mittlere Korngröße unterhalb von 10 µm auf, so dass erfindungsgemäß der kugelförmige Füllstoff eine mittlere Korngröße oberhalb von 10 µm aufweist. Bevorzugt liegt die mittlere Korngröße des kugelförmigen Füllstoffes im Bereich von 20 bis 500 µm, stärker bevorzugt zwischen 30 und 300 µm und besonders bevorzugt zwischen 40 und 150 µm.

Um eine bessere Verarbeitbarkeit zu erreichen, ist es erforderlich, dass die kugelförmigen Füllstoffe größer sind als die übrigen in der Zusammensetzung enthaltenen festen Bestandteile, mit Ausnahme des physikalisch wirkenden Treibmittels. Völlig unerwartet hat die Größe des physikalisch wirkenden Treibmittels keinen Einfluss auf die Verarbeitbarkeit der Zusammensetzung, auch nicht bei hohen Faseranteilen. Erfindungsgemäß weißt daher der kugelförmige Feststoff eine mittlere Korngröße auf, welche größer ist als die mittlere Korngröße der übrigen in der Zusammensetzung enthaltenen Feststoffe.

Neben der besseren Verarbeitbarkeit ist die Verwendung der kugelförmigen Füllstoffe, insbesondere der Leichtfüllstoffe darüber hinaus in einigen weiteren Punkten vorteilhaft. Durch deren Verwendung kann unter anderem die Dichte reduziert werden, der Schrumpf auf ein auf ein Minimum reduziert und die Kosten der Zusammensetzung gesenkt werden.

Die Erfinder haben nun überraschend herausgefunden, dass gerade durch die Kombination von physikalisch wirkenden Treibmitteln, Aschekrustenstabilisator, insbesondere Phosphorhaltigen Verbindungen und anorganischen Fasern ein synergistischer Effekt erzielt wird und das Verblasen bzw. das Herausfallen der Aschekruste gegenüber anderen Brandschutzadditiven und insbesondere gegenüber den Einzelsubstanzen deutlich reduziert werden kann. Ohne dass die vorliegende Erfindung an eine Theorie gebunden oder dadurch beschränkt ist, nehmen die Erfinder an, dass der synergistische Effekt darauf beruht, dass das die Glasfasern durch die Phosphor-haltige Verbindung, welche bei den im Brandfall herrschenden Temperaturen verglasen, verklebt werden und die expandierten Graphitpartikel fest in die Struktur eingebunden werden. Hierdurch können trotz der vereinfachten Zusammensetzung sehr harte und stabile Aschekrusten gebildet werden.

Gegebenenfalls können die Brandschutzadditive ferner mindestens ein ablativ wirkendes Additiv enthalten. Zweckmäßig werden als ablativ wirkende Additive solche Materialien eingesetzt, die durch Wasserabspaltung, das etwa in Form von Kristallwasser eingelagert ist, und Wasserverdampfung energieverzehrende Schichten bilden. Die Wärmeenergie, die zur Abspaltung des Wassers aufgewendet werden muss, wird dabei dem Brand entzogen. Ferner werden solche Materialien eingesetzt, die sich bei Hitzeeinwirkung in einer endothermen Reaktion chemisch verändern bzw. zersetzen, verdampfen, sublimieren oder schmelzen. Dadurch werden die beschichteten Substrate gekühlt. Häufig werden bei der Zersetzung inerte, d.h. nicht brennbare Gase wie etwa Kohlendioxid freigesetzt, welche zusätzlich den Sauerstoff in unmittelbarer Umgebung des beschichteten Substrates verdünnen.

Als gasabspaltende Bestandteile eignen sich Hydroxide, wie Aluminiumhydroxid und Magnesiumhydroxid sowie deren Hydrate, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°, wogegen die Wasserabspaltung von Magnesiumhydroxid bei ca. 350° einsetzt, so dass die Gasabspaltung über einen größeren Temperaturbereich hinweg erfolgt.

Geeignete ablativ wirkende Materialien sind, bei Hitzeeinwirkung wasserabgebende anorganische Hydroxide oder Hydrate, wie solche von Natrium, Kalium, Lithium, Barium, Calcium, Magnesium, Bor, Aluminium, Zink, Nickel, ferner Borsäure und deren teilentwässerte Derivate.

Beispielhaft können folgende Verbindungen genannt werden: LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·H₂O, AIOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃.3CaSO₄·32H₂O (Hydromagnesit), Mg₅(OH)₂(CO₃)₄.4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierte Kohlen und Graphite, Kieselsäuren.

In einer bevorzugten Ausführungsform sind die hydrierten Salze ausgewählt aus der Gruppe bestehend aus Al(SO₄)·16-18H₂O, NH₄Fe(SO₄)₂·12H₂O, Na₂B₄O₇·10H₂O, NaAl(SO₄)₂·12H₂O, AlNH₄(SO₄)₂·12-24H₂O, Na₂SO₄·10H₂O, MgSO₄·7H₂O, (NH₄)₂SO₄·12H₂O; KAl(SO₄)₂·12H₂O, Na₂SiO₃·9H₂O, Mg(NO₂)₂·6H₂O, Na₂CO₃·7H₂O und Gemischen davon (EP1069172A).

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate und Addukte. Solche Verbindungen sind beispielsweise beschrieben in S. V Levchik, E. D Weil, Polym. Int. 2004, 53, 1901-1929.

Gegebenenfalls können die erfindungsgemäßen Zusammensetzungen weitere übliche Zusätze enthalten, wie Weichmacher, Füllstoffe, Pigmente, Additive zur Einstellung der rheologischen Eigenschaften, Verdickungsmittel, Dispergierhilfsmittel, Emulgatoren, Biozide, Fungizide, Konservierungs- und Alterungsschutzmittel, Frostschutzmittel, Netzmittel, Entschäumer und/oder Hautbildungsverzögerer. Diese weiteren Zusätze sind handelsübliche Produkte, die dem Fachmann auf dem Gebiet der Dichtmassen für insbesondere Bauzwecke bekannt sind.

Als Füllstoffe können die üblicherweise in Dichtmassen verwendeten und dem Fachmann bekannten Füllstoffe verwendet werden, solange sie keine Reaktion mit Säuren eingehen. Als Füllstoffe können beispielhaft erwähnt werden: Kreide, Bariumsulfat, Quarz, Talkum, Kaolin, Calciumsulfat und/oder Calciumsilikat. Der Füllstoff kann alleine oder als Gemisch von zwei oder mehreren verwendet werden.

Als Pigmente kann die Zusammensetzung vorzugsweise Eisenoxid, Titandioxid, Zinksulfid, Zinkoxid und/oder organische oder anorganische Farbpigmente enthalten.

Als Additive zur Einstellung der rheologischen Eigenschaften kann die erfindungsgemäße Zusammensetzung beispielsweise hochdisperse Kieselsäure, Bentonite oder modifizierte Bentonite, Polyacrylate und/oder Cellulosederivate, wie Celluloseether, enthalten.

Die Additiven können in einer Menge von etwa 0,05 bis 2,5 Gew.-%, bevorzugt 0,1 bis 1 Gew.-%, besonders bevorzugt 0,1 bis 0,5 Gew.-%, bezogen auf das Gesamtgewicht der Zusammensetzung, enthalten sein.

Die folgenden Beispiele dienen der weiteren Erläuterung der Erfindung.

### AUSFÜHRUNGSBEISPIELE

Für die Beurteilung der Aschekrustenfestigkeit werden aus den Massen Platten mit etwa 5 mm Dicke hergestellt und 2 Wochen bei Raumtemperatur und weitere 2 Wochen bei 50°C ausgehärtet. Aus diesen Platten werden Scheiben mit einem Durchmesser von 50 mm ausgestanzt. Diese Scheiben werden auf einer Metallplatte bei 600°C für 30 min verascht. Danach werden die entstandenen Aschenkörper mit einem Spatel zerdrückt und dabei die Festigkeit beurteilt, wobei die Beurteilung anhand einer Skala von 1 bis 6 erfolgte. Eine Beurteilung mit dem Wert 1, bedeutet eine sehr geringe und eine Beurteilung mit dem Wert 6 bedeutet eine sehr hohe Aschekrustenstabilität.

Für die Verarbeitung steht exemplarisch die Glättbarkeit, also wie leicht sich eine glatte, optisch ansprechende Oberfläche herstellen lässt. Störende Faktoren sind dabei Fadenzug und Runzelbildung.

Die nachfolgende Tabelle zeigt die Bestandteile und deren Mengen der Vergleichszusammensetzungen und der erfindungsgemäßen Zusammensetzungen. Ferner sind in der Tabelle die Beurteilung der Verarbeitung der jeweiligen Zusammensetzung und die Beurteilung der Krustenfestigkeit, d.h. der Festig der gebildeten Aschekruste, gezeigt.

Wie ersichtlich ist, lassen sich die erfindungsgemäßen Zusammensetzungen (Beispiele 1 - 3) besser verarbeiten und ergeben trotz der vereinfachten Zusammensetzung der Aschekrustenstabilisatoren relativ harte Aschekrusten, verglichen mit den Vergleichszusammensetzungen (Vergleichsbeispiele 1 - 4).

| | **Vergleichsbeispiel 1** | **Vergleichsbeispiel 2** | **Vergleichsbeispiel 3** | **Vergleichsbeispiel 4** | **Beispiel 1** | **Beispiel 2** | **Beispiel 3** |
|---|---|---|---|---|---|---|---|
| Acrylatdispersion | 39,00 % | 39,00 % | 39,00 % | 39,00 % | 39,00 % | 39,00 % | 39,00 % |
| Ammoniak 25% | 0,70 % | 0,70 % | 0,70 % | 0,70 % | 0,70 % | 0,70 % | 0,70 % |
| Isotridecanolethoxylat | 0,20 % | 0,20 % | 0,20 % | 0,20 % | 0,20 % | 0,20 % | 0,20 % |
| Ammoniumacrylat | 0,50 % | 0,50 % | 0,50 % | 0,50 % | 0,50 % | 0,50 % | 0,50 % |
| Hydroxyethylcellulose | 0,40 % | 0,40 % | 0,20 % | 0,20 % | 0,20 % | 0,20 % | 0,20 % |
| Wasser | 4,00 % | 4,00 % | 5,40 % | 5,40 % | 5,40 % | 5,40 % | 5,40 % |
| Kaolin | | | | | | | 24,80 % |
| Kreide | 25,10% | 37,10 % | 34,80 % | 32,80 % | 22,80 % | 24,8 % | |
| Schaumglaskugeln | | | | | 10,00 % | 10,00 % | 10,00 % |
| Glasfaser | 1,10 % | 1,10 % | 2,20 % | 2,20 % | 2,20 % | 2,20 % | 2,20 % |
| Ammoniumpolyphosphat | 10,00 % | 10,00 % | 10,00 % | | | 10,00 % | 10,00 % |
| Zinkborat | 12,00 % | | | 12,00 % | 12,00 % | | |
| Blähgraphit | 6,00 % | 6,00 % | 6,00 % | 6,00 % | 6,00 % | 6,00 % | 6,00 % |
| Eisenoxid | 1,00 % | 1,00 % | 1,00 % | 1,00 % | 1,00 % | 1,00 % | 1,00 % |
| | 100,00 % | 100,00 % | 100,00 % | 100,00 % | 100,00 % | 100,00 % | 100,00 % |
| | | | | | | | |
| **Verarbeitung** | **gut** | **gut** | **sehr schlecht** | **sehr schlecht** | **sehr gut** | **sehr gut** | **sehr gut** |
| | | | | | | | |
| **Krustenfestigkeit** | **5** | **2** | **6** | **4** | **4** | **6** | **5** |

## Patentansprüche

1. Zusammensetzung, umfassend
∘ ein Bindemittel auf Basis einer wässrigen oder Lösungsmittel-basierten Polymerdispersion,
∘ Brandschutzadditive, welche
- ein physikalisch wirkendes Treibmittel und
- einen Aschekrustenstabilisator umfassen,
∘ anorganische Fasern und
∘ einen kugelförmigen Füllstoff,
wobei der kugelförmige Füllstoff eine mittlere Korngröße aufweist, welche größer ist als die mittlere Korngröße der übrigen in der Zusammensetzung enthaltenen Feststoffe, ausgenommen das physikalisch wirkende Treibmittel,
**dadurch gekennzeichnet, dass**
die Länge der anorganischen Fasern zwischen 2 und 12 mm beträgt.

2. Zusammensetzung nach Anspruch 1, wobei der Aschekrustenstabilisator Zinkborat oder eine Phosphor-haltige Verbindung, ausgewählt unter Salzen oder Estern der Oxosäuren des Phosphors ist.

3. Zusammensetzung nach Anspruch 1 oder 2, wobei die Partikelgröße des kugelförmigen Füllstoffes > 20 µm beträgt.

4. Zusammensetzung nach Anspruch 3, wobei die Partikelgröße des kugelförmigen Füllstoffes zwischen 40 und 500 µm beträgt.

5. Zusammensetzung nach einem der vorhergehenden Ansprüche, wobei der kugelförmige Füllstoff ein Leichtfüllstoff ist.

6. Zusammensetzung nach einem der vorhergehenden Ansprüche, wobei das physikalisch wirkende Treibmittel unter Graphit-Interkallationsverbindungen, Schichtsilikat-Interkallationsverbindungen und/oder Vermiculit ausgewählt ist.

7. Zusammensetzung nach Anspruch 6, wobei das physikalisch wirkende Treibmittel unter Graphit-Interkallationsverbindungen ausgewählt ist.

8. Zusammensetzung nach einem der vorhergehenden Ansprüche, wobei die Oxosäure des Phosphors unter Orthophosphorsäure, Pyrophosphorsäure, Triphosphorsäure oder Polyphosphorsäure ausgewählt ist.

9. Zusammensetzung nach Anspruch 8, wobei die Phosphor-haltige Verbindung aus der Gruppe ausgewählt ist, bestehend aus Monoammoniumphosphat, Diammoniumphosphat, Ammoniumphosphat, Melaminharzphosphaten, Kaliumphosphat, Melaminphosphat, Ammoniumpolyphosphat und Melaminpolyphosphaten.

10. Zusammensetzung nach einem der vorhergehenden Ansprüche, wobei das Bindemittel auf Basis einer wässrigen oder Lösungsmittel-basierten Polymerdispersion eine Acrylat-(Copolymer)-Dispersion umfasst.

11. Zusammensetzung nach einem der vorhergehenden Ansprüche, die ferner weitere Additive und/oder Füllstoffe enthält.

12. Verwendung einer Zusammensetzung nach einem der Ansprüche 1 bis 11 als Dichtmasse, insbesondere als Brandschutzdichtmasse.

## Claims

1. Composition, comprising
∘ a binder based on an aqueous or solvent-based polymer dispersion,
∘ fire protection additives, which comprise
- a physically acting propellant and
- an ash crust stabilizer,
∘ inorganic fibres and
∘ a spherical filler,
in which the spherical filler has an average grain size, which is greater than the average grain size of the other solids contained in the compound, except for the physically acting propellant,
**characterised in that**
the length of the inorganic fibres is between 2 and 12 mm.

2. Composition according to claim 1, in which the ash crust stabilizer is zinc borate or a phosphorous-containing compound, selected from salts or esters of the oxoacids of phosphorous.

3. Composition according to claim 1 or 2, in which the particle size of the spherical filler > 20 µm.

4. Composition according to claim 3, in which the particle size of the spherical filler is between 40 and 500 µm.

5. Composition according to one of the previous claims, in which the spherical filler is a light filler.

6. Composition according to one of the previous claims, in which the physically acting propellant is selected from graphite intercalation compounds, layered silicate intercalation compounds and/or vermiculite.

7. Composition according to claim 6, in which the physically acting propellant is selected from graphite intercalation compounds.

8. Composition according to one of the previous claims, in which the oxoacid of phosphorous is selected from orthophosphoric acid, pyrophosphoric acid, triphosphoric acid or polyphosphoric acid.

9. Composition according to claim 8, in which the phosphorous-containing compound is selected from the group consisting of monoammonium phosphate, diammonium phosphate, ammonium phosphate, melamine resin phosphates, potassium phosphate, melamine phosphate, ammonium polyphosphate and melamine polyphosphates.

10. Composition according to one of the previous claims, in which the binder based on an aqueous or solvent-based polymer dispersion comprises an acrylate (copolymer) dispersion.

11. Compound according to one of the previous claims, which also contains further additives and/or fillers.

12. Use of a composition according to one of claims 1 to 11 as sealant, particularly as fire protection sealant.

## Revendications

1. Composition comprenant :
° un liant basé sur une dispersion de polymère aqueuse ou à base de solvant,
° des additifs de protection contre le feu comprenant :
- un agent d'expansion agissant physiquement et
- un stabilisateur de croûte de cendre,
° des fibres inorganiques et
° une charge sphérique,
dans laquelle la charge sphérique a une granulométrie moyenne qui est supérieure à la granulométrie moyenne des charges généralement contenues dans la composition, à l'exception de l'agent d'expansion agissant physiquement,
**caractérisée en ce que**
la longueur des fibres inorganiques est comprise entre 2 et 12 mm.

2. Composition selon la revendication 1, dans laquelle le stabilisateur de croûte de cendre est du borate de zinc ou un composé contenant du phosphore, choisi parmi des sels ou des esters d'oxyacides du phosphore.

3. Composition selon la revendication 1 ou 2, dans laquelle la taille des particules de la charge sphérique est > 20 µm.

4. Composition selon la revendication 3, dans laquelle la taille des particules de la charge sphérique est comprise entre 40 et 500 µm.

5. Composition selon l'une des revendications précédentes, dans laquelle la charge sphérique est une charge légère.

6. Composition selon l'une des revendications précédentes, dans laquelle l'agent d'expansion agissant physiquement est choisi parmi des composés d'intercalation de graphite et/ou des composés d'intercalation de silicate feuilleté et/ou la vermiculite.

7. Composition selon la revendication 6, dans laquelle l'agent d'expansion agissant physiquement est choisi parmi des composés d'intercalation de graphite.

8. Composition selon l'une des revendications précédentes, dans laquelle l'oxyacide du phosphore est choisi parmi un acide orthophosphorique, un acide pyrophosphorique, un acide triphosphorique ou un acide polyphosphorique.

9. Composition selon la revendication 8, dans laquelle le composé contenant du phosphore est choisi parmi le groupe constitué de phosphate de monoammonium, de phosphate de diammonium, de phosphate d'ammonium, de phosphates de résine de mélamine, de phosphate de potassium, de phosphate de mélanine, de polyphosphate d'ammonium et de polyphosphates de mélamine.

10. Composition selon l'une des revendications précédentes, dans laquelle le liant basé sur une dispersion de polymère aqueuse ou à base de solvant comprend une dispersion de copolymère acrylate.

11. Composition selon l'une des revendications précédentes, contenant en outre des additifs et/ou des charges supplémentaires.

12. Utilisation d'une composition selon l'une des revendications 1 à 11 en tant que composant d'étanchéité, en particulier en tant que composant d'étanchéité de protection contre le feu.
